(19) Europäisches Patentamt

European Patent Office

Office européen des brevets

(11) Veröffentlichungsnummer: **0 200 877 B1**

(12) **EUROPÄISCHE PATENTSCHRIFT**

(45) Veröffentlichungstag der Patentschrift: **02.05.91**

(21) Anmeldenummer: **86102964.3**

(22) Anmeldetag: **06.03.86**

(51) Int. Cl.⁵: **B65D 17/50**

(54) **Flüssigkeitspackung sowie Verfahren und Vorrichtung zur Herstellung derselben.**

(30) Priorität: **18.04.85 DE 3513976**

(43) Veröffentlichungstag der Anmeldung:
**12.11.86 Patentblatt 86/46**

(45) Bekanntmachung des Hinweises auf die
Patenterteilung:
**02.05.91 Patentblatt 91/18**

(84) Benannte Vertragsstaaten:
**AT BE CH DE FR GB IT LI LU NL SE**

(56) Entgegenhaltungen:
**EP-A- 0 059 635**
**DE-A- 3 338 704**
**US-A- 3 666 138**
**US-A- 4 116 359**
**US-A- 4 170 314**

(73) Patentinhaber: **AB Tetra Pak**
**Ruben Rausings Gata**
**S-221 86 Lund(SE)**

(72) Erfinder: **Stark, Sven Olof Sören**
**Sjörup 23**
**S-271 00 Ystad(SE)**

(74) Vertreter: **Weber, Dieter, Dr. et al**
**Dr. Dieter Weber und Dipl.-Phys. Klaus Seif-**
**fert Patentanwälte Gustav-Freytag-Strasse**
**25 Postfach 6145**
**W-6200 Wiesbaden 1(DE)**

## Beschreibung

Die Erfindung betrifft eine Flüssigkeitspackung aus Karton oder dergleichen, der mindestens auf seiner einen Oberfläche durch Kunststoffbeschichtung flüssigkeitsundurchlässig ist, mit Seitenwänden, Boden und Oberwand, die wenigstens teilweise durch Falt- und/oder Siegelnähte miteinander verbunden sind, mit einer in der Oberwand nahe der Randlinie befindlichen, aufreißbaren Ausgießöffnung mit einem separaten Kunststoffstreifen, der im Bereich der Ausgießöffnung mindestens diese überdeckt, um den Rand der Ausgießöffnung umgelegt und mindestens von der Unterseite aufgesiegelt ist.

Aus der DE-A-24 07 345 ist bereits eine Flüssigkeitspackung ähnlich der vorstehend bezeichneten bekannt. In die Ausgießöffnung wird im bekannten Fall ein thermoplastischer Streifen, z.B. aus Polystyrol, durch Warmverformung und teilweiser Versiegelung an der Packungsaußenseite eingebracht. Es ist danach bekannt, einen Kunststoffstreifen zu erwärmen und mit einem Preßwerkzeug so zu verformen, daß die auf der Innenseite der Packung angeordnete Bodenfläche dieses bekannten Hohldeckels größer als die Fläche der Ausgießöffnung ist. Dadurch ergibt sich eine gewisse Schnappwirkung, so daß der Hohldeckel auch ohne die Versiegelung auf der Packungsaußenseite mit gewisser Festigkeit in der Ausgießöffnung sitzt. Zum Öffnen wird der gesamte Hohldeckel herausgezogen, so daß die Ausgießöffnung freiliegt und die Flüssigkeit nach Kippen der Packung ausgegossen werden kann. Der bekannte Hohldeckel kann zum Wiederverschließen auch wieder hinter die Ränder der Ausgießöffnung eingeschnappt werden.

Nachteilig ist es bei dieser bekannten Packung, daß der Rand der Ausgießöffnung durch den Stanzvorgang bzw. durch das Schneiden ohne Kunststoffbeschichtung frei nach außen liegt. Wird Flüssigkeit über diesen Rand hinweggegossen oder gelangtanderweitig nach dem Wiederverschließen eine Flüssigkeitsrestmenge von oben in diesen freien Rand, dann saugt durch Kapillarwirkung die Trägermaterialbahn die Flüssigkeit in den Rand der Ausgießöffnung ein, verliert dadurch ihre Steifigkeit und wird unhygienisch.

Aufgabe der Erfindung ist es, eine Flüssigkeitspackung der eingangs näher beschriebenen Art zu schaffen, bei welcher der Rand der Ausgießöffnung nach dem Öffnen der Ausgießvorrichtung mit einer Schutzschicht bedeckt bleibt, wobei es insbesondere vorteilhaft ist, den Verschluß der Ausgießöffnung und die Schutzschicht am Rand der Ausgießöffnung mit einfachen Mitteln und möglichst praktischer Montage zu erstellen.

Diese Aufgabe wird für die Flüssigkeitspackung selbst erfindungsgemäß dadurch gelöst, daß der Kunststoffstreifen die gesamte Ausgießöffnung dichtend überdeckt und über zwei Heftflächen an einem äußeren Abdeckstreifen befestigt ist, in welchem sich im Bereich über der Ausgießöffnung ein Loch befindet, daß beide Heftflächen kleiner als die Fläche des Abdeckstreifens ist, die erste Heftfläche im Abstand vom Loch und außerhalb der Ausgießöffnung angeordnet ist, die zweite Heftfläche außerhalb des Loches des Abdeckstreifens und innerhalb der Ausgießöffnung angeordnet ist, daß der Kunststoffstreifen über eine vierte, außerhalb der Ausgießöffnung befindliche Heftfläche an der Innenseite der Oberwand befestigt ist und daß der äußere Abdeckstreifen über eine dritte, außerhalb des Kunststoffstreifens liegende Heftfläche an der Oberwand der Packung befestigt ist. Mit diesen Maßnahmen ist es möglich, in einfacher Weise und schnell, d.h. mit wenigen Arbeitsschritten an der Packungs-Herstellungsmaschine die Ausgießöffnung flüssigkeitsdicht zu verschließen und sowohl vor als auch nach dem Öffnen die Ränder der Ausgießöffnung mit einer Schutzabdeckung gegen eindringende Feuchtigkeit zu schützen. Es ist zwar schon bekannt, einen äußeren Abdeckstreifen über eine Heftfläche an der Oberwand der Packung zu befestigen, diese Maßnahme kann aber nicht das Eindringen von Flüssigkeit in den durch den Schnitt offenen Rand der Ausgießöffnung verhindern (fehlender Kantenschutz).

In besonders vorteilhafter Weise wird der an dem äußeren Abdeckstreifen angebrachte Kunststoffstreifen außerhalb des Randes der Ausgießöffnung auf derjenigen Seite der Packungsoberwand in Form einer durchgehenden Schleife aufgesiegelt, welche später die Innenseite der Flüssigkeitspackung wird. Damit ist der Kantenschutz einwandfrei gewährleistet, denn die Flüssigkeit kann unter diesen Bedingungen von keiner Seite in die durch den Schnitt freie Kante der Trägermaterialbahn einbringen. Die Trägermaterialbahn besteht praktischer Weise aus Papier oder Karton, während der Kunststoffstreifen und auch die Kunststoffbeschichtung aus Thermoplast bestehen. In bekannter Weise können dann ohne Klebstoffe Befestigungen der einzelnen Bahnen und Streifen aufeinander vorgenommen werden (durch Versiegeln).

Besonders vorteilhaft ist es, wenn die erste Heftfläche bandförmig quer über den äußeren Abdeckstreifen verlaufend vorgesehen ist und die zweite Heftfläche das gesamte Loch im Abdeckstreifen umgibt. Die erwähnte erste Heftfläche stellt verfahrensmäßig die erste Verbindung zwischen dem Kunststoffstreifen und dem äußeren Abdeckstreifen dar. Wenn beide Streifen z.B. rechteckförmig sind, kann man sie zur Vereinfachung der gesamten Öffnungsvorrichtung durch Abschneiden von einem größeren Streifen bilden. Die bandförmig angeordnete erste Heftfläche kann man dann vorzugsweise in Längsrichtung des größeren Bandes legen, aus welchem die einzelnen Abdeckstreifen durch Querschnitte abgetrennt werden. Auf diese Weise kann man in Längsrichtung eines Bandes eine Heftfläche vorsehen, längs welcher die Kunststoffstreifen sehr einfach anbringbar sind. Das sich ergebende Produkt ist dann ein breiteres Band dessen Breite gleich der Länge des einzelnen Abdeckstreifens bzw. des flächig auf diesem liegenden Kunststoffstreifens ist. Durch Querschnitte über die Breite dieses größeren Bandes lassen sich dann die erwähnten äußeren Abdeckstreifen abschneiden.

Hingegen umgibt die zweite Heftfläche das gesamte Loch im Abdeckstreifen. Besonders bevorzugt ist es dabei, wenn die radial äußeren Kanten der zweiten Heftfläche in der Nähe des Randes der Ausgießöffnung verlaufen. Durch die Anordnung der zweiten Heftfläche wird nämlich nach dem Aufreißen des Abdeckstreifens bzw. Kunststoffstreifens die Ausgießöffnung definiert.

Das Loch im äußeren Abdeckstreifen weist zwar ebenfalls nach außen unbedeckte Schnittflächen auf, in welche Flüssigkeit eindringen könnte, der äußere Abdeckstreifen kommt aber mit Flüssigkeit im allgemeinen nicht in Berührung, so daß hier ein entsprechender Kantenschutz nicht erforderlich ist.

Zusammenfassend kann man also feststellen, daß Form und Anordnung der ersten Heftfläche der praktischen Herstellung dient; Form und Anordnung der zweiten Heftfläche der Einleitung und Durchführung des Öffnungsvorganges dient.

Zweckmäßig ist es ferner, wenn die dritte Heftfläche, in Aufreißrichtung des Abdeckstreifens gesehen, hinter der Ausgießöffnung angeordnet ist. Über diese dritte Heftfläche wird der Abdeckstreifen auf der Oberwand der Flüssigkeitspackung fixiert. Für den Fachmann ist klar, daß eine räumlich kleine Fläche für diese dritte Heftfläche ausreicht. Besonders vorteilhaft ist es nun, wenn zum Öffnen der Aufreißvorgang von der Gießkante aus beginnt, so daß das erste Einreißen an der in Aufreißrichtung des Abdeckstreifens vordersten Stelle der sogenannten zweiten Heftfläche beginnt und nach Ablösen der gesamten zweiten Heftfläche im wesentlichen beendet werden kann, denn dann ist die Ausgießöffnung offen.

Die Länge des äußeren Abdeckstreifens (in Aufreißrichtung gesehen) kann gleich der Länge des an diesem befestigten Kunststoffstreifens sein. Für ein gutes Aussehen der Packungsoberwand kann es erwünscht sein, den Abdeckstreifen stets mindestens so groß wie den bei Draufsicht darunter befindlichen Kunststoffstreifen zu lassen. Zur Bildung einer Gießkante kann der Kunststoffstreifen aber auch bis nach vorn (entgegen der Aufreißrichtung) über die nächstliegende Randlinie reichend vorgesehen werden, wobei sein vorderstes Ende im Bereich der Randlinie versiegelungsfrei bleibt und damit eine günstige Gießkante ergibt. Dennoch kann der äußere Abdeckstreifen gleich groß oder kürzer als der Kunststoffstreifen ausgebildet sein.

Die eingangs erwähnte Aufgabe wird bei einem entsprechenden Verfahren gelöst, wobei auf den Bereich der aus der Oberwand ausgestanzten Ausgießöffnung ein die Öffnung überdeckender Kunststoffstreifen so aufgesiegelt wird, daß die über der Ausgießöffnung liegende Fläche auf ein Niveau unterhalb der Oberwand becherförmig tiefgezogen wird, dadurch gekennzeichnet, daß ein äußerer Abdeckstreifen über eine erste und eine zweite Heftfläche am Kunststoffstreifen und über eine dritte Heftfläche außen am Oberboden befestigt wird, zum Tiefziehen ein gasförmiges Fluid durch ein Loch im Abdeckstreifen auf den Kunststoffstreifen geblasen wird und der Boden des tiefgezogenen Bechers derart verformt wird, daß die Bodenfläche größer als die Fläche der Ausgießöffnung ist, und wieder gegen die untere Ringfläche außerhalb des Randes der Ausgießöffnung längs einer vierten Heftfläche aufgesiegelt wird. Als gasförmiges Fluid verwendet man besonders günstig Druckluft, welche durch das Loch in dem Karton-Abdeckstreifen direkt auf den Kunststoffstreifen drückt und diesen in eine entsprechende Form, d.h. das Aufnahmewerkzeug, hineindrückt. Der Boden des Bechers erhält eine größere Fläche als die Ausgießöffnung hat, was man auf verschiedene Arten gewährleisten kann, je nach Werkzeugbewegung und -form. Ebenfalls ist die Abdichtung der offenen Kante der Ausgießöffnung durch die erwähnte vierte Heftfläche auf einfache Weise gewährleistet, weil das Material des ohnehin vorhandenen, tiefgezogenen Bodens als Kantenschutz und Befestigung für denselben verwendet werden kann. Die vierte Heftfläche liegt außerhalb des Randes der Ausgießöffnung und ringförmig auf derjenigen Seite der Oberwand, die später die Innenseite der packung wird.

Zweckmäßig bringt man an der Materialbahn für die Flüssigkeitspackung zuerst die gesamte Öffnungsvorrichtung in der hier beschriebenen Weise an und verschließt dann erst die gegenüberliegende Seite der Packung nach dem Füllen. Auf diese Weise kann man die Oberwand zwischen die verschiedensten beweglichen Werkzeuge bringen und von beiden Seiten Drücke bzw. Gegendrücke auf die Oberwand und ihre aufgelegten Schichten ausüben.

Besonders vorteilhaft ist es, wenn der Kunststoffstreifen mitsamt daran befestigtem Abdeckstreifen mit Loch auf den Bereich der Ausgießöffnung aufgelegt und nur auf einer Seite von der Ausgießöffnung und im Abstand von dieser vor dem Tiefziehen auf dem Oberboden der Packung befestigt wird. Vorstehend ist bereits auf die günstige Herstellung der neuen Öffnungsvorrichtung hingewiesen worden, wonach zunächst die Einheit: Kunststoff- und Abdeckstreifen hergestellt wird; dann dieser doppellagige Streifen auf den Bereich der Ausgießöffnung aufgelegt und an einer bestimmten Stelle, die nicht allzu groß sein muß, auf der Oberwand der Packung fixiert wird. Diese Stelle ist die sogenannte dritte Heftfläche, die gemäß den vorstehenden Maßnahmen direkt vor dem Tiefziehen des Kunststoffstreifens erstellt wird. Zwecks einer günstigen Öffnung befindet sich diese dritte Heftfläche in Aufreißrichtung des Abdeckstreifens hinter der Ausgießöffnung und im Abstand von dieser. Auf anderen Seiten der Ausgießöffnung ist die dritte Heftfläche nicht erforderlich, denn sie soll lediglich die Fixierung des doppellagigen Streifens, insbesondere des Kunststoffstreifens sicherstellen, damit der Tiefziehvorgang schnell und exakt eingeleitet und durchgeführt werden kann.

Das beschriebene Verfahren kann ferner dadurch weiter ausgestaltet werden, daß vor dem Tiefziehen des Kunststoffstreifens Heißluft von der dem äußeren Abdeckstreifen abgewandten Seite durch die Ausgießöffnung auf den Kunststoffstreifen aufgeblasen wird. Es handelt sich hier um eine besonders einfache, preiswerte, schnelle und umweltfreundliche Methode, den Kunststoffstreifen in dem erforderlichen Bereich für das Tiefziehen vorzubereiten. In praktischer Weise wird die Ausgießöffnung selbst als Kulisse oder Grenzfläche verwendet, so daß nämlich nur der Kunststoffstreifen innerhalb der Ausgießöffnung erwärmt wird und außerhalb vorhandene Siegelstellen (die erste Heftfläche) unbeeinflußt verbleiben.

Dabei hat es sich als besonders zweckmäßig erwiesen, wenn die Temperatur der Heißluft im Bereich zwischen 300°C und 500°C liegt. Die Temperatur und auch die Länge der Aufblaszeit der Heißluft hängen einerseits gegenseitig voneinander und andererseits auch von dem Volumen des zu erwärmenden Kunststoffstreifens ab. Die Vorrichtung zur Herstellung der Öffnungsvorrichtung ist unter geschickter Lösung der eingangs erwähnten Aufgabenstellung dadurch gekennzeichnet, daß unter einem einen Druckluftdurchgangskanal aufweisenden Gegenbacken im Abstand ein Aufnahmewerkzeug für das tiefgezogene Werkstück mit beweglichen Boden- und Seitenteilen angeordnet und mit Heiz- oder Ultraschalleinrichtungen versehen ist, und daß weiterhin ein anstelle des Gegenbackens anbringbarer Gegendruckbakken mit Außengegenbacken sowie ein anstelle des Aufnahmewerkzeuges anbringbarer und hochdrückbarer Druckdorn zur Erstellung der ersten und vierten Heftfläche vorgesehen sind. Auf diese Weise ist eine sehr einfache Herstellungsvorrichtung geschaffen. Von einer Rolle wird das breite Band mit den quer verlaufenden doppellagigen Streifen (äußerer Abdeckstreifen und Kunststoffstreifen) herangefördert, der jeweilige doppellagige Streifen kann durch ein einfaches Messer abgetrennt werden, wonach ein Greifer diesen vereinzelten Streifen über der ausgestanzten Ausgießöffnung in Position bringt. Eine Siegelbacke mit Gegenbacke fixiert diesen Streifen auf der Oberwand, wonach das Tiefzieh- und Schweißwerkzeug beschickt wird und die restlichen Arbeiten in einer Station hintereinander durchgeführt werden. Die Zeit zwischen dem Fixieren des doppellagigen Streifens auf dem Oberboden und dem Erfassen durch Tiefzieh- und Schweißwerkzeuge wird gleichzeitig benutzt, um die Heißluft in der beschriebenen Weise auf dem Kunststoffstreifen innerhalb der Ausgießöffnung aufzubringen.

Man erkennt, daß durch die vorstehenden Maßnahmen mit einem sehr einfachen Arbeitswerkzeug die Öffnungsvorrichtung mitsamt den Vorteilen des guten Ausgießens, der Dichtigkeit und des Kantenschutzes schnell und einfach erstellt werden kann. Dabei kann man sich anstelle des Materials Papier für den äußeren Abdeckstreifen ebenso auch eine Aluminiumfolie denken; welche vorzugsweise mindestens einseitig mit Kunststoff beschichtet ist.

Weitere Vorteile und Anwendungsmöglichkeiten der vorliegenden Erfindung ergeben sich aus der folgenden Beschreibung eines bevorzugten Ausführungsbeispieles in Verbindung mit den Zeichnungen. Es zeigen:

Figur 1 perspektivisch den oberen Teil einer Flüssigkeitspackung mit Ausgießöffnung und Aufreißstreifen, wobei Siegelnähte der Faltpackung nicht gezeigt sind,

Figur 2 die Draufsicht auf das breite Band mit den quer nebeneinander angeordneten Abdeck- und Kunststoffstreifen,

Figur 3 abgebrochen eine Querschnittsansicht entlang der Linie III-III der Figur 2,

Figur 4 eine schematische und abgebrochene Querschnittsansicht des Oberbodens der Flüssigkeitspackung, aus welchem die Ausgießöffnung ausgestanzt ist, welche selbst im Abstand darunter dargestellt ist,

Figur 5 schematisch die abgebrochene Querschnittsansicht durch den Oberboden der Flüssigkeitspackung im Bereich der Ausgießöffnung mit aufgelegtem doppellagigem Abdeck- und Kunststoffstreifen beim Anbringen dieses doppellagigen Streifens auf der Oberseite der Packung,

Figur 6    in gleicher Darstellung den in Figur 5 gezeigten Bereich des Oberbodens der Packung, wobei das Formwerkzeug angesetzt ist, dessen Bodenteil in einer alternativen Ausführungsform in Figur 6 unten gestrichelt mehrteilig und beweglich dargestellt ist, und

Figur 7    ebenfalls abgebrochen und schematisch die Querschnittsansicht durch den Bereich des Packungsoberbodens nach dem Fertigstellen des aufreißbaren Verschlusses.

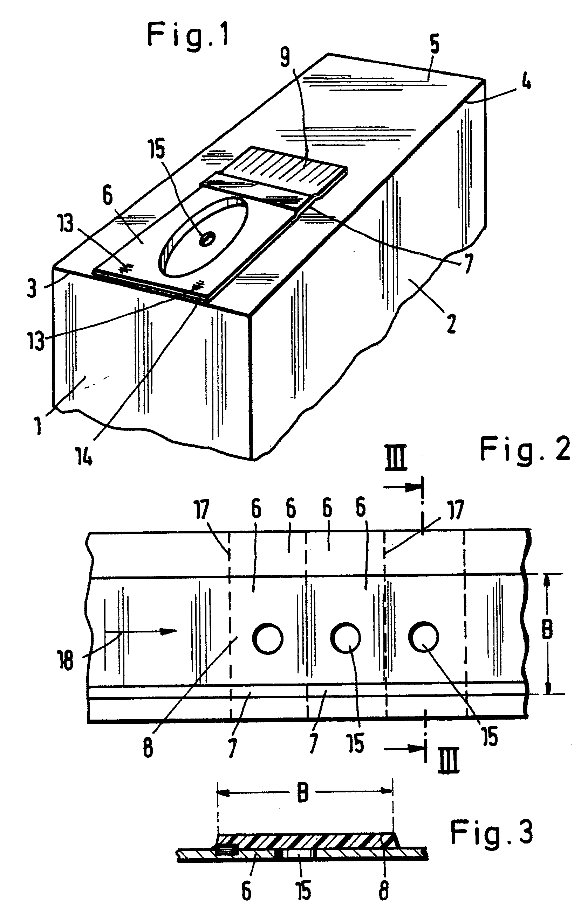

Wenn die Flüssigkeitspackung fertiggestellt ist, hat sie beispielsweise das Aussehen der Figur 1, wobei allerdings Quer- und/oder Längssiegelnähte der Packung weggelassen sind. Von den vier Seitenwänden erkennt man die vordere schmale Seitenwand 1 und die breite Seitenwand 2, mit denen über Faltlinien 3 und 4 die Oberwand 5 verbunden ist. Die vordere Faltlinie 3 zwischen der schmalen Seitenwand 1 und der Oberwand 5 ist eine Randlinie, über welche bei der Benutzung der Ausgießstrahl fließen soll.

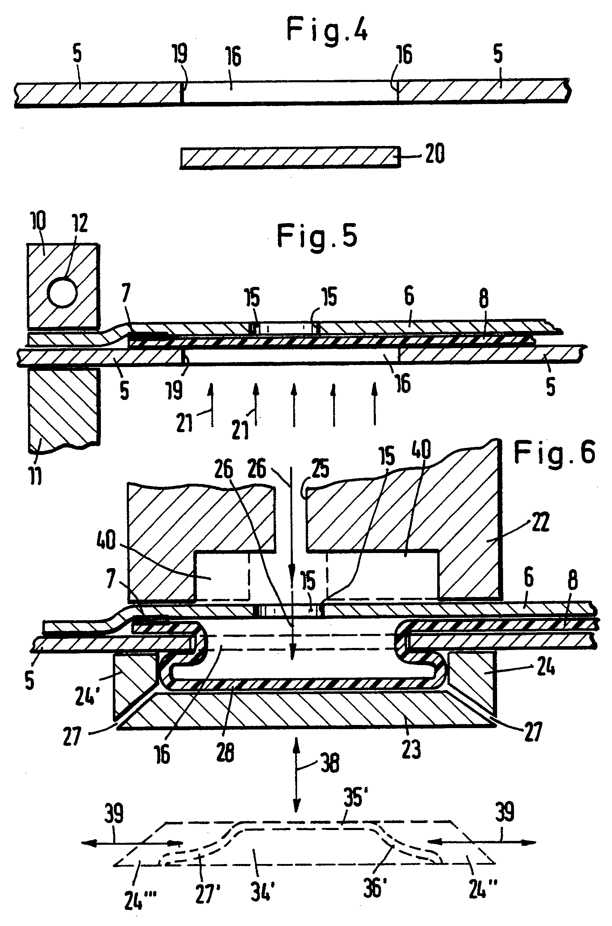

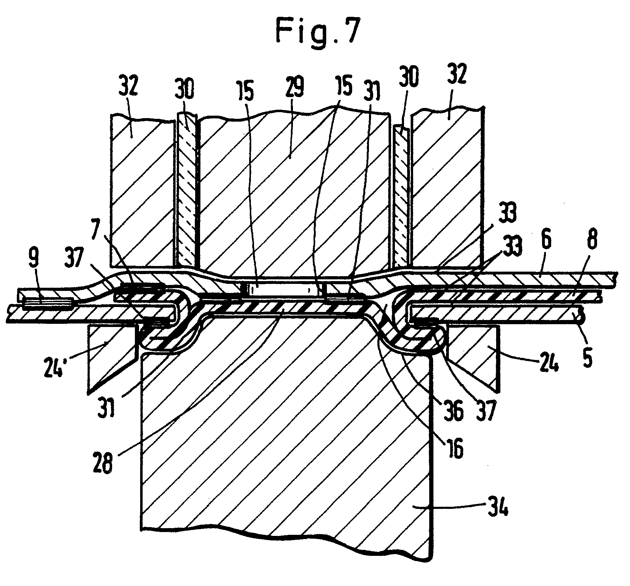

Im Bereich nahe der Randlinie 3 befindet sich in der Oberwand 5 der äußere Abdeckstreifen 6, der über die erste Heftfläche 1 mit dem gemäß Darstellung in Figur 1 unsichtbaren darunterliegenden Kunststoffstreifen verbunden ist, der aus der Figuren 2, 3 und 5 bis 7 hervorgeht und mit 8 bezeichnet ist. Längs der in Figur 7 gezeigten dritten Heftfläche 9 (schraffierter Bereich in Figur 1) ist der äußere Abdeckstreifen, der hier als Trägermaterial Karton oder Papier ist, auf der Oberwand 5 befestigt. Diese Befestigung erfolgt über die Heizbacken 10 mit Gegendruckbacken 11, wie in Figur 5 gezeigt ist, wobei durch die runde Öffnung 12 das Temperiermittel fließen kann. Außerdem sind in Figur 1 zwei kleinere und mit 13 bezeichnete Bereiche dargestellt, über welche der Abdeckstreifen 6 und/oder Kunststoffstreifen 8 mit der Oberwand 5 durch Punktschweißen verbunden ist, während im übrigen die mit 14 bezeichnete Gießkante schweißfrei verblieben ist.

Bei Draufsicht auf Figur 1 erkennt man das Loch 15 im äußeren Abdeckstreifen 6, der im Bereich der Ausgießöffnung 16 eine vertiefte Lage zeigt, die man auch in Figur 7 erkennt. Demgegenüber liegt der Abdeckstreifen 6 über der ersten Heftfläche 7 erhöht, wie man ebenfalls aus den Figuren 1 und 7 erkennt.

Figur 2 zeigt das breite Band des doppellagigen Streifens 6, 8, wobei dessen Querschnitt entlang der Linie III-III in Figur 3 gezeigt ist. In der Draufsicht von oben sieht man oben zunächst den Kunststoffstreifen 8, der durchsichtig ist, weil er ein Polyäthylenfilm ist, und seine Breite B ist in den Figuren 2 und 3 gezeigt. Darunter liegt der jeweilige äußere Abdeckstreifen 6, der ein beidseitig mit Polyäthylen verschweißbar beschichteter Karton ist. Längs der gestrichelten Linien 17 werden die einzelnen doppellagigen Streifen 6, 8 von dem Band durch Schneiden abgetrennt. Man erkennt die sich bandförmig an einem Ende des Kunststoffstreifens 8 quer über diesen erstreckende erste Heftfläche 7. Bei der Erstellung des doppellagigen Bandes nach Figur 2 braucht diese Heftfläche 7 lediglich in Förderrichtung 18 dieses Bandes 6, 7 aufgelegt zu werden.

Der Kunststoffstreifen 8 ist mit dem Abdeckstreifen 6 aus beschichtetem Papier lediglich über die erste Heftfläche 7 verbunden. Die Verbindung mit der Oberwand 5 der Verpackung erfolgt in der oben beschriebenen Weise gemäß Figur 5 durch Schweißen, d.h. durch Erstellen der dritten Heftfläche 9. Damit ist der Abdeckstreifen 6 in der gewünschten Lage über der Ausgießöffnung 16 mit dem unbeschichteten Schnittrand 19 fixiert.

Figur 4 zeigt im Querschnitt die Ausgießöffnung 16, aus welcher das Stück 20 herausgestanzt ist, welches dann weggeworfen wird. Die Ränder 19 sind ohne Schutzabdeckung (Kantenschutz), während auf den großflächigen Oberflächen über und unter der Oberwand 5 dünne Kunststoffbeschichtungen in an sich bekannter Weise zu denken sind. Flüssigkeit könnte in diese offenen, die Fasern nach außen legenden Ränder 19 eindringen und das Papier von hier aus quellen lassen sowie unstabil machen, wenn nicht die nachfolgend beschriebenen Maßnahmen als Kantenschutz vorgesehen würden.

Nach dem Ausstanzen der Ausgießöffnung 16 gemäß Figur 4 wird der Abdeckstreifen 6 mit über die erste Heftfläche 7 angebrachtem Kunststoffstreifen 8 gemäß Figur 5 über die dritte Heftfläche 9 auf der Oberwand 5 fixiert. Man erkennt, daß der Kunststoffstreifen 8 die Ausgießöffnung 16 vollständig abdeckt. Auf der in Figur 5 oberen Seite des Kunststoffstreifens 8 befindet sich das Loch 15, auf der unteren Seite ist die viel größere und beispielsweise konzentrisch dazu angeordnete Ausgießöffnung 16 in der Oberwand 5 vorgesehen. Warmluft mit einer Temperatur zwischen 300° C und 500° C je nach Einwirkzeit und Volumen des Kunststoffstreifens 8 wird in Richtung der Pfeile 21 von der Innenseite der Packung 5 durch die Ausgießöffnung 16 auf den Kunststoff 8 geblasen. Hierdurch erwärmt sich der Kunststoff und wird tiefziehfähig.

Gemäß Figur 6 wird ein weiteres Werkzeug mit Gegenbacken 22 und Aufnahmewerkzeug 23, 24, 24' unter Aufnahme des Abdeckstreifens 6 angesetzt. Im Gegenbacken 22 ist ein Gasdurchgangskanal 25 angeordnet, dessen austrittsseitiges Ende etwa über dem Loch 15 und über der Ausgießöffnung 16 mündet. Aus einer nicht dargestellten Druckluftquelle wird Druckluft in Richtung der Pfeile 26 von oben durch das Loch 15 auf den Kunststoffstreifen 8 aufgeblasen, während durch die Kanäle 27 Luft nach außen aus dem Aufnahmewerkzeug 23, 24 entweichen kann. Dadurch legt sich der Kunststoffstreifen 8 in der gewünschten Form auf das Bodenteil 23 und die Seitenteile 24, 24' des Aufnahmewerkzeuges, so daß der Boden 28 des becherförmig tiefgezogenen Teils des Kunststoffstreifens 8 größer als die Fläche der Ausgießöffnung 16 ist.

Nach Abnehmen des Aufnahmewerkzeuges 23, 24 wird weiterhin gemäß Figur 7 das endgültige Verschlußwerkzeug angesetzt. Dieses besteht aus dem Gegendruckbacken 29, der temperiert werden kann, und den durch Isoliermaterial 30 in ähnlicher Ringform wie die noch zu erwähnende zweite Heftfläche 31 isolierten Außengegenbacken 32, die scharf abkühlbar sind. Sinn des Kühlens ist die Vermeidung einer zusätzlichen Heftflächean der Stelle 33 dort soll eine Verbindung zwischen Abdeckstreifen 6, Kunststoffstreifen 8 und Oberwand 5 vermieden werden. Ähnliches gilt auf der gegenüberliegenden Seite, in Figur 7 also links über der ersten Heftfläche 1, obgleich dort eine Verschweißung für den oben beschriebenen Öffnungsvorgang nicht schädlich ist. (Das Öffnen erfolgt gemäß Figur 7 von rechts nach links).

Auf der den Gegenbacken 29, 32 bezüglich der Oberwand 5 gegenüberliegenden Seite befindet sich der Druckdorn 34 mit der gewünschten oberen Kontur, d.h. einer mittleren Erhöhung 35 und ringförmigen, einseitig offenen Nuten 36 für die Aufnahme der doppelt gelegten ringförmigen Teile des Kunststoffstreifens 8.

In der letzten Fertigungsstufe nach Figur 7 wird mit Ultraschall oder über eine Heizung über den Druckdorn 34 mit Gegenbacken 29, 32 die zweite Heftfläche 31 erstellt, die außen das Loch 15 im Abdeckstreifen 6 vollständig umgibt und sich in dichtem Abstand vom Rand 19 der Ausgießöffnung 16 befindet. Diese zweite Heftfläche 31 soll kräftig sein, weil sie beim Aufreißen die eigentliche Öffnung schafft.

Beim Hochbewegen des Druckdornes 34 wird nicht nur das ringförmige Material außerhalb der zweiten Heftfläche 31 um den Rand 19 der Ausgießöffnung 16 umgelegt und mit den ringförmigen Ausnehmungen 36 des Druckdornes 34 hochgedrückt, sondern es wird gleichzeitig auch die ringförmige vierte Heftfläche 37 erstellt, die in dichtender Weise ein Eindringen von Flüssigkeit aus dem Raum unterhalb der Oberwand 5 zum Rand 19 der Ausgießöffnung 16 hin vermeiden soll und kann.

Bei der nach Figur 7 erstellten Packung ist der Kunststoffstreifen 8 sowohl über die erste Heftfläche 7 als auch über die zweite Heftfläche 31 und - von der gegenüberliegenden Seite - über die vierte Heftfläche 37 mit dem Abdeckstreifen 6 verbunden.

In Figur 6 ist unten der Druckdorn 34' in gestrichelter Weise gezeigt. Es handelt sich hier um ein Werkzeug, bei welchem das Aufnahmewerkzeug mit dem Druckdorn und damit der Arbeitsschritt gemäß den Figuren 6 und 7 vereinigt ist. Der Druckdorn ist in Figur 6 unten mit 34' bezeichnet, und man sieht wiederum seine erhöhte Fläche 35' mit der nutenförmigen Ausnehmung 36', an der unter Belassung von Entlüftungskanälen 27' die äußeren Backen 24'' rechts und 24''' links angeordnet sind. Gemäß Doppelpfeil 38 ist diese in Figur 6 unten gezeigte Einheit 34', 24'', 24''' anstelle der Einheit 23 verwendbar und derart auf- und abschiebbar, daß die seitlichen Backen 24'' und 24''' gemäß der Doppelpfeile 39 seitlich so verschiebbar sind, daß das Oberteil 22 des Werkzeuges gemäß Figur 6 bei Vorsehen einer Temperaturisolierung 30 sogleich auch als Gegenbacken anstelle der Extrawerkzeuge 29, 32 verwendet werden kann. In diesem Falle allerdings sollte der Raum unter dem Werkzeugoberteil 22 entsprechend der gestrichelten Teile 40 so ausgefüllt sein, daß dieser Gegendruckbacken 22 die gesamte Oberfläche des Abdeckstreifens 6 bedeckt. Es braucht also lediglich der Raum zwischen der Gasdurchführungsöffnung 25 und über dem Loch 15 im Abdeckstreifen 6 für das Durchströmen der Druckluft gemäß Pfeil 26 freibleiben.

## Ansprüche

1. Flüssigkeitspackung aus Karton oder dergleichen, der mindestens auf seiner einen Oberfläche durch Kunststoffbeschichtung flüssigkeitsundurchlässig ist, mit Seitenwänden (1, 2), Boden und Oberwand (5), die wenigstens teilweise durch Falt- (3, 4) und/oder Siegelnähte miteinander verbunden sind, mit einer in der Oberwand (5) nahe der Randlinie (3) befindlichen, aufreißbaren Ausgießöffnung (16) mit einem separaten Kunststoffstreifen (8), der im Bereich der Ausgießöffnung (16) mindestens diese überdeckt, um den Rand (19) der Ausgießöffnung (16) umgelegt und mindestens von der Unterseite aufgesiegelt ist, **dadurch gekennzeichnet,** daß der Kunststoffstreifen (8) die gesamte Ausgießöffnung (16) dichtend überdeckt und über zwei Heftflächen (7, 31) an einem äußeren Abdeckstreifen (6) befestigt ist, in welchem sich im Bereich über der Ausgießöffnung (16) ein Loch (15) befindet, daß beide Heftflächen (7, 31) kleiner als die Fläche des Abdeckstreifens (6) ist, die erste Heftfläche (7) im Abstand vom Loch (15) und außerhalb der Ausgießöffnung (16) angeordnet ist, die zweite Heftfläche (31) außerhalb des Loches (15) des Abdeckstreifens (6) und innerhalb der Ausgießöffnung (16) angeordnet ist, daß der Kunststoffstreifen (8) über eine vierte, außerhalb der Ausgießöffnung (16) befindliche Heftfläche (37) an der Innenseite der Oberwand (5) befestigt ist und daß der äußere Abdeckstreifen (6) über eine dritte, außerhalb des Kunststoffstreifens (8) liegende Heftfläche (9) an der Oberwand (5) der Packung befestigt ist.

2. Flüssigkeitspackung nach Anspruch 1, dadurch gekennzeichnet, daß die erste Heftfläche (7) bandförmig quer über den äußeren Abdeckstreifen (6) verlaufend vorgesehen ist und die zweite Heftfläche (31) das gesamte Loch (15) im Abdeckstreifen (6) umgibt.

3. Flüssigkeitspackung nach Anspruch 1 oder 2, dadurch gekennzeichnet, daß die dritte Heftfläche (9), in Aufreißrichtung des Abdeckstreifens (6) gesehen, hinter der Ausgießöffnung (16) angeordnet ist.

4. Verfahren zur Herstellung der Öffnungsvorrichtung an einer Packung nach einem der Ansprüche 1 bis 3, wobei auf den Bereich der aus der Oberwand (5) ausgestanzten Ausgießöffnung (16) ein die Öffnung (16) überdeckender Kunststoffstreifen (8) so aufgesiegelt wird, daß die über der Ausgießöffnung (16) liegende Fläche auf ein Niveau unterhalb der Oberwand (5) becherförmig tiefgezogen wird, **dadurch gekennzeichnet**, daß ein äußerer Abdeckstreifen (6) über eine erste und eine zweite Heftfläche (7, 31) am Kunststoffstreifen (8) und über eine dritte Heftfläche (9) außen am Oberboden (5) befestigt wird, zum Tiefziehen ein gasförmiges Fluid (26) durch ein Loch (15) im Abdeckstreifen (6) auf den Kunststoffstreifen(8) geblasen wird und der Boden (28) des tiefgezogenen Bechers derart verformt wird, daß die Bodenfläche (28) größer als die Fläche der Ausgießöffnung (16) ist, und wieder gegen die untere Ringfläche außerhalb des Randes (19) der Ausgießöffnung (16) längs einer vierten Heftfläche (37) aufgesiegelt wird.

5. Verfahren nach Anspruch 4, dadurch gekennzeichnet, daß der Kunststoffstreifen (8) mitsamt daran befestigtem Abdeckstreifen (6) mit Loch (15) auf den Bereich der Ausgießöffnung (16) aufgelegt und nur auf einer Seite von der Ausgießöffnung (16) und im Abstand von dieser vor dem Tiefziehen auf dem Oberboden (5) der Packung befestigt wird.

6. Verfahren nach Anspruch 4 oder 5, dadurch gekennzeichnet, daß vor dem Tiefziehen des Kunststoffstreifens (8) Heißluft (21) von der dem äußeren Abdeckstreifen (6) abgewandten Seite durch die Ausgießöffnung (16) auf den Kunststoffstreifen (8) aufgeblasen wird.

7. Verfahren nach Anspruch 6, dadurch gekennzeichnet, daß die Temperatur der Heißluft (21) 300° C bis 500° C beträgt.

8. Vorrichtung zur Durchführung des Verfahrens nach einem der Ansprüche 4 bis 7, **dadurch gekennzeichnet**, daß unter einem einen Druckluftdurchgangskanal (25) aufweisenden Gegenbacken (22) im Abstand ein Aufnahmewerkzeug (23, 24, 24') für das tiefgezogene Werkstück (8, 28) mit beweglichen Boden- (23) und Seitenteilen (24, 24') angeordnet und mit Heiz- oder Ultraschalleinrichtungen versehen ist, und daß weiterhin ein anstelle des Gegenbackens (22) anbringbarer Gegendruckbacken (29) mit Außengegenbacken (32) sowie ein anstelle des Aufnahmewerkzeuges (23, 24) anbringbarer und hochdrückbarer Druckdorn (34) zur Erstellung der zweiten und vierten Heftflächen (31, 37) vorgesehen sind.

## Claims

1. A liquid pack of cardboard or the like which is impervious to liquid at least on its one surface by virtue of a plastics coating, comprising side walls (1, 2), a bottom and a top wall (5) which are at least partially joined together by folding (3, 4) and/or sealing seams, with a pouring opening (16) which is disposed in the top wall (5) adjacent the edge line (3) and which can be torn open, with a separate plastics strip (8) which in the region of the pouring opening (16) covers over at least said opening, is laid around the edge (19) of the pouring opening (16), and is sealed in position at least from the underside, characterised in that the plastics strip (8) sealingly covers over the entire pouring opening (16) and is secured by way of two attachment surfaces (7, 31) to an outer cover strip (6) in which a hole (15) is provided in the region over the pouring opening (16), that both attachment surfaces (7, 31) are smaller than the surface area of the cover strip (6), the first attachment surface (7) is arranged at a spacing from the hole (15) and outside the pouring opening (16), the second attachment surface (31) is arranged outside the hole (15) in the cover strip (6) and within the pouring opening (16), that the plastics strip (8) is secured to the inside of the top wall (5) by way of a fourth attachment surface (37) which is outside the pouring opening (16), and that the outer cover strip (6) is secured to the top wall (5) of the pack by way of a third attachment surface (9) which is outside the plastics strip (8).

2. A liquid pack according to claim 1 characterised in that the first attachment surface (7) is arranged to extend in a strip form transversely over the outer cover strip (6) and the second attachment surface (31) surrounds the entire hole (15) in the cover strip (6).

3. A liquid pack according to claim 1 or claim 2 characterised in that the third attachment surface (9), as viewed in the direction of tearing opening the cover strip (6), is arranged rearwardly of the pouring opening (16).

4. A process for the production of an opening arrangement on a pack according to one of claims 1 to 3 wherein a plastics strip (8) which covers over the pouring opening (16) which is stamped out of the top wall (5) is sealed on to the region of the opening (16) in such a way that the surface which is disposed over the pouring opening (16) is depressed in a cup-like configuration to a level below the top wall (5), characterised in that an outer cover strip (6) is secured to the plastics strip (8) by way of first and second attachment surfaces (7, 31) and to the top wall (5) on the outside thereof by way of a third attachment surface (9), to produce the cup-like depression a gaseous fluid (26) is blown through a hole (15) in the cover strip (6) on to the plastics strip (8) and the bottom (28) of the depressed cup configuration is deformed in such a way that the bottom surface area (28) is larger than the area of the pouring opening (16) and is again sealed against the lower annular surface outside the edge (19) of the pouring opening (16) along a fourth attachment surface (37).

5. A process according to claim 4 characterised in that the plastics strip (8) together with the cover strip (6) which is secured thereto, with the hole (15), is laid on to the region of the pouring opening (16) and fixed on the top wall (5) of the pack only on one side of the pouring opening (16) and at a spacing therefrom, prior to the operation of forming the cup-like depression.

6. A process according to claim 4 or claim 5 characterised in that prior to the operation of forming the cup-like depression in the plastics strip (8) hot air (21) is blown through the pouring opening (16) on to the plastics strip (8) from the side remote from the outer cover strip (6).

7. A process according to claim 6 characterised in that the temperature of the hot air (21) is from 300° C to 500° C.

8. Apparatus for carrying out the process according to one of claims 4 to 7 characterised in that a receiving tool (23, 24, 24') for receiving the workpiece (8, 28) of depressed configuration with movable bottom portion (23) and side portions (24, 24') is arranged at a spacing under a co-operating jaw (22) having a compressed air flow passage (25) therethrough, and is provided with heating or ultrasound means, and that in addition there are provided a co-operating pressing jaw (29) which can be applied instead of the co-operating jaw (22), with outside co-operating jaws (32), and a highly pressurisable pressing mandrel (34) which can be applied instead of the receiving tool (23, 24) for the purposes of providing the second and fourth attachment surfaces (31, 37).

## Revendications

1. Emballage pour liquides, en carton ou analogue, lequel est imperméable aux liquides au moins sur l'une de ses surfaces à l'aide d'une enduction plastique, comportant des parois latérales (1, 2), un fond et une paroi supérieure (5), qui sont liés les uns aux autres au moins partiellement par des joints pliés (3, 4) et/ou thermoscellés, avec un orifice verseur (16), arrachable, se trouvant dans la paroi supérieure (5) au voisinage de la ligne de bord (3) et comportant une bande plastique distincte (8), qui la recouvre au moins dans la zone de l'orifice verseur (16), est rabattue autour du bord (19) de l'orifice verseur (16) et est thermoscellée au moins à partir de la face inférieure, caractérisé en ce que la bande plastique (8) recouvre d'une manière étanche la totalité de l'orifice verseur (16) et est fixée par l'intermédiaire de deux surfaces d'attache (7, 31) à une bande de couverture extérieure (6), dans laquelle, dans la zone située au-dessus de l'orifice verseur (16), se trouve un trou (15) ; que les deux surfaces d'attache (7, 31) ont une aire inférieure à l'aire de la bande de couverture (6) ; que la première surface d'attache (7) est disposée à une certaine distance du trou (15) et à l'extérieur de l'orifice verseur (16) ; que la deuxième surface d'attache (31) est disposée à l'extérieur du trou (15) de la bande de couverture (6) et à l'intérieur de l'orifice verseur (16) ; que la bande plastique (8) est fixée à la face intérieure de la paroi supérieure (5) par l'intermédiaire d'une quatrième surface d'attache (37) se trouvant à l'extérieur de l'orifice verseur (16) ; et que la bande de couverture extérieure (6) est fixée à la paroi supérieure (5) de l'emballage par une troisième surface d'attache (9) disposée à l'extérieur de la bande plastique (8).

2. Emballage pour liquides selon la revendication 1, caractérisée en ce que la première surface d'attache (7) est prévue en forme de bande courant transversalement sur la bande de couverture extérieure (6), et que la deuxième surface d'attache (31) entoure la totalité du trou (15) aménagé dans la bande de couverture (6).

3. Emballage pour liquides selon les revendications 1 ou 2, caractérisé en ce que la troisième surface d'attache (9) est disposée en arrière de l'orifice verseur (16), quand on la regarde dans le sens d'arrachage de la bande de couverture (6).

4. Procédé pour la fabrication d'un dispositif d'ouverture d'un emballage selon l'une des revendications 1 à 3, dans lequel, sur la zone de l'orifice verseur (16), découpé dans la paroi supérieure (5), une bande plastique (8), qui recouvre l'orifice (16) est appliquée par thermoscellage de façon que la surface située au-dessus de l'orifice verseur (16) soit emboutie en forme d'auge jusqu'à un niveau situé en-dessous de la paroi supérieure (5), caractérisé en ce qu'une bande de couverture extérieure (6) est fixée par l'intermédiaire d'une première et d'une deuxième surfaces d'attache (7, 31) à la bande plastique (8) et par l'intermédiaire d'une troisième surface d'attache (9), à l'extérieur, au fond supérieur (5) ; que, pour assurer l'emboutissage, un fluide gazeux (26) est insufflé sur la bande plastique (8) par un trou (15) aménagé dans la bande de couverture (6) et que le fond (28) de l'auge emboutie est déformé de façon que la surface du fond (28) ait une aire supérieure à l'aire de l'orifice verseur (16) ; et qu'une quatrième surface d'attache (37) est appliquée longitudinalement par thermoscellage contre la surface annulaire inférieure, située à l'extérieur du bord (19) de l'orifice verseur (16).

5. Procédé selon la revendication 4, caractérisé en ce que la bande plastique (8), avec la bande de couverture(6) fixée par-dessus, et comportant un trou (15), est appliquée sur la zone de l'orifice verseur (16), et n'est fixée sur le fond supérieur (5) de l'emballage que sur une face de l'orifice verseur (16), et à une certaine distance de ce dernier, avant l'emboutissage.

6. Procédé selon les revendications 4 ou 5, caractérisé en ce que, avant l'emboutissage de la bande plastique (8), de l'air chaud (21) est, à partir du côté opposé à la bande plastique extérieure (6), insufflé sur la bande plastique (8) en passant par l'orifice verseur (16).

7. Procédé selon la revendication 6, caractérisé en ce que la température de l'air chaud (21) est de 300 à 500° C.

8. Dispositif pour la mise en oeuvre du procédé selon l'une des revendications 4 à 7, caractérisé en ce que, en-dessous d'une contre-mâchoire (22) comportant une gaine de passage d'air comprimé (25), et à une certaine distance de cette dernière, est disposé un moule récepteur (23, 24, 24') destiné à recevoir la pièce emboutie (8, 28), et comportant des parties de fond (23) et latérales (24, 24') mobiles, ce moule récepteur étant pourvu de dispositifs de chauffage ou d'ultrasons ; et que, en outre, il est prévu une mâchoire de contre-pression (29), pouvant être disposée à la place de la contre-mâchoire (22), comportant une contre-mâchoire extérieure (32), ainsi qu'un mandrin de compression (34), pouvant être disposé à la place du moule récepteur (23, 24) et pouvant appliquer une pression élevée, pour la réalisation de la deuxième et de la quatrième surfaces d'attache (31, 37).

Fig.1

Fig. 2

Fig.3

# Fig.4

# Fig.5

# Fig.6

# Fig. 7